# EUROPEAN PATENT APPLICATION

(11) **EP 2 708 594 A1**
(43) Date of publication of application: **19.03.2014**
(21) Application number: 12184845.1
(22) Date of filing: 18.09.2012
(51) Int. Cl.: C11D 7/26, C11D 11/00

(54) **Cleaning process**

(71) Applicant: Jotun A/S, 3202 Sandefjord (NO)
(72) Inventor: RISBERG, Erik, 612-849 Busan (KR); Myrseth, Kenneth, Busan (KR)
(74) Representative: Campbell, Neil Boyd

(57) **Abstract**

A process for cleaning at least a part of a ship's hull above the low load line which has become discoloured above the low load line;
said method comprising applying to a discoloured ship's hull coated with a copper-containing anti-fouling coating composition, a cleaning solution comprising water and an organic carboxylic acid having a molecular weight of 400 g/mol or less and which comprises at least one hydrophilic group and at least one carboxylic acid group or comprises at least two carboxylic acid groups, so as to remove at least a part of said discolouration;
wherein at least a part of the ship's hull above the low load line has been exposed to sea water for a period of no more than 60 days, e.g. during a sea trial period.

## Description

The present invention relates to a process for cleaning the hull of a new ship on which an antifouling coating composition has been applied, in particular to make sure that the hull appears pristine for official "launch" or naming and delivery to the customer. The process uses an aqueous organic acid wash to remove degradation products of the anti-fouling coating composition that can form on a ship's hull, for example, during a sea trial and which cause discolouration of the anti-fouling coating.

### Background of Invention

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economical consequences. The fouling may lead to biological degradation of the surface, increased load and accelerated corrosion. On vessels the fouling will increase the frictional resistance which will cause reduced speed and/or increased fuel consumption. It can also result in reduced manoeuvrability.

To prevent settlement and growth of marine organisms antifouling paints are used. These paints generally comprise a film-forming binder, together with different components such as pigments, fillers, solvents, additives and biologically active substances.

The most successful self-polishing antifouling systems on the market today are based on silyl ester functional (meth)acrylic copolymers. These coating compositions are for example described in, EP 0 646 630, EP 0 802 243, EP 1 342 756, EP 1 479 737, EP 1 641 862, WO 00/77102, WO 03/070832 and WO 03/080747.

Silyl ester copolymers contain hydrolysable silyl groups on the polymer backbone. These hydrolysable groups are key to the surface degradation process, one of the most important factors for obtaining a successful antifouling coating. In the presence of water the silyl ester groups will hydrolyse and carboxylic acid groups are formed on the polymer backbone, which in turn are converted to the corresponding carboxylates under the basic conditions in natural seawater. This makes the polymer hydrophilic and thereby water erodable. A certain amount of hydrolysable groups are needed to get sufficient hydrophilicity and an erodable polymer after hydrolysis.

As noted above, the anti-fouling coatings also comprise a marine antifouling agent, typically one based on copper such as cuprous oxide. As the coating erodes, the copper compounds leach out of the coating and act as biocides to marine animals.

The applicant has realised that shipyards and ship owners are increasingly concerned about the appearance of brand new or refurbished vessels during naming ceremonies and delivery to customers. Traditionally this is called "launch" although these days a vessel is typically in sea water already when it is named and handed over to the customer. New vessels or refurbished vessels that might be changing name and owner are named, often by celebrities or royalty. During this naming ceremony, the vessel needs to look brand new and any discoloration of the antifouling coating is regarded as unacceptable. There are however, various ways in which these new ships or refurbished ships can present with a discoloured hull.

Outfitting is the process in modem shipbuilding that precedes sea trials. It is the period when all the construction of the ship is completed and the vessel readied for delivery to her owners. Most of the outfitting process is interior work and typically takes place in a outfitting berth, i.e. afloat.

The capacity of drydocks in a shipyard is often the limiting factor for the number of vessels that can be manufactured. Therefore, the yard tries to get vessels into berth as soon as possible to free capacity of the dry dock. The final coat of antifouling composition is typically applied a few days before the drydock is filled with sea water and the vessel floated to the portside for outfitting.

Outfitting therefore occurs in port and depending on the type of vessel, fitting-out can last many months. The process can include installation of the ship's engines and other machinery, fitting of interior equipment and systems, finishing of interior spaces and furnishings and so on. Whilst the outfitting process is going on, the antifouling coating above the draft line (and this typically means the low load line at this stage) is exposed to the sun.

New ships or refurbished ships are, of course, taken to sea trial before delivery to ensure seaworthiness and operational efficiency (mainly fuel efficiency). The sea trial involves a short period of time in the water under various loads from no ballast to fully loaded with ballast and it is during this time that most discolouration manifests itself.

The level of water against the ship's hull at any time is called the draft line. This level moves from the deep load line which is the draft line when the ship is fully loaded to the low load line when there is no ballast or cargo on board. During outfitting, the water level will be at an "outfitting draft" line. The outfitting draft line may well be at the low load line as there is generally no ballast during outfitting but in theory it could be higher than that. This invention primarily relates to the removal of discolouration above the water line that is present during outfitting, called the outfitting draft line herein. Normally, therefore this invention relates to discolouration above the low load line.

At the end of sea trial, ballast is removed and anti-fouling coating which has been submerged at full ballast during sea trial comes back above the water again. The area of the hull between deep load line and low load line which was underwater when fully loaded during sea trial is now above water again (as it was during the outfitting period). When this part of the hull, which has been exposed to sunlight during outfitting is re-exposed to the air after sea trial, the anti-fouling coating can appear discoloured. When the ship is returned to port after sea trial but before the official naming ceremony and delivery, the hull can therefore be discoloured.

It will be appreciated that due to the movement of waves and splashing parts, of the hull above the water line, e.g. the deep load line are also exposed to sea water repeatedly. These areas can also discolour.

There may, however, be other sources for hull discoloration. Discolouration can occur on the hull if an antifouling coating is exposed to condensation, high humidity or rain shortly after application. Whilst the coating is drying, it has a tendency to absorb water and this can lead to discolouration.

It may also be that bleaching of the anti-fouling coating can occur through exposure to sunlight.

We believe that the discolouration we observe, whether caused during sea trial or one of the other mechanisms mentioned above, can be seen on all conventional antifouling coatings that are based on copper anti-foulants in the binder system. It appears to lack importance if the acrylic binder polymer is based on metal carboxylates (in pendant side groups on the polymeric backbone) or resins functionalized with trialkyl silyl esters. Moreover, the use of other pigments, or the choice of co-biocides seems to affect the discoloration only to a minor extent.

In the first instance, the present inventors have realised that during outfitting of vessels the antifouling coating is exposed to UV light for a prolonged period, perhaps as much as 3-12 months.

We believe that changes in polymer structure caused by UV exposure mean that the polymer binder has a tendency to increase water uptake. This water uptake in the very top-layer of the coating seems to affect the morphology of the coating with a whitish appearance as a result. The appearance of this whitish colour and hence the discolouration of the hull occurs during sea trial when the hull has been immersed in seawater for a short period of time and has the change to take on water.

In the second instance, when an anti-fouling coating composition is drying, the presence of water should be avoided. If it rains or the air is very humid or there is condensation, there is again a risk that the drying coating takes on water, in particular in the surface layer. This may be due to the fact that solvent is still present in the film during drying and this may act as a plasticiser. This again leads to discolouration.

A further problem is that the copper compounds in the coating, in particular, cuprous oxide in the coating, can oxidize to form coloured salts such as greenish salts, during the sea trial or even when exposed to water during anti-fouling coating drying. These are likely to be Cu²⁺ compounds. This reaction is a reflection of the natural way in which the antifouling coating is designed to function, but with an increased water uptake in the very surface layer of the coating, the cuprous oxide particles are solubilised much faster than intended with a resulting excessive formation of copper compounds. As the sea water taken up contains a number of possible ligands or ions which can react with copper this increases the risk of forming copper degradation products.

We believe that the root cause of discolouration is always the morphology differences in the polymer binder due to increased water uptake and formation of binder degradation products and copper salts.

Both causes of discoloration (copper salts or binder degradation) give the antifouling coating system on the hull a non-uniform appearance, which leads to complaints from both ship owners and yards. This invention seeks to remove this discolouration to make sure that ship yards and owners have a ship fit for delivery to the customer.

In general, this invention targets the removal of any hull discolouration caused by the presence of anti-fouling coating composition degradation products, especially above the low load line. In particular however, the discoloration that we target with this invention may occur on an area of hull exposed to UV radiation during the outfitting period or exposed to high humidity, condensation and rain before the antifouling coating is fully cured, and which is then in contact with sea water during sea trial. Discolouration of most impact occurs above the low load line and below the deep load line, i.e. on surfaces that are exposed to sea water when a ship is underway (and under ballast). Removing this discolouration is of particular interest.

Our theory therefore is that the cause of the discoloration is exposure of the anti-fouling coating composition to atmospheric conditions of sun, rain, humidity and so on. Sea trial makes the changes that atmospheric conditions have induced manifest themselves as discolouration. The changes to the polymer film to cause discolouration are there prior to sea trial but it is exposure to sea water that means the changes manifest as discolouration.

The present inventors are the first to fully appreciate that this problem even exists and through careful analysis about possible mechanism have proposed a solution to the problem. In particular, the inventors suggest the use of an aqueous organic acid based cleaning solution to remove the discolouration after sea trial but before naming.

The use of organic acid based solutions to clean ship's hulls has been discussed before but not for the cleaning process proposed herein. In US4,181,622, marine accumulations and stains are removed from small boats using an organic acid, water and alcohol blend but the hull surface on these small boats is a gel coat and not an anti-fouling coating composition. A gel coat is a material used to provide a high-quality finish on the visible surface of a fibre-reinforced composite material. The most common gel coats are based on epoxy or unsaturated polyester resin chemistry. Gel coats are modified resins which are applied to moulds in the liquid state. They are cured to form crosslinked polymers and are subsequently backed with composite polymer matrices, often mixtures of polyester resin and fiberglass or epoxy resin with glass. Many smaller marine craft and aircraft are manufactured using composite materials with an outer layer of gel coat, typically 0.5 mm to 0.8 mm thick. A gel coat does not contain any copper compounds and is therefore a very different coating compared to conventional antifouling coatings used on much larger vessels.

EP-A-2308956 concerns the over coating of an antifouling coating with a fouling release coating. A fouling release coating is one that relies on a frictionless surface to prevent marine fouling rather than a biocide. EP-A-2308956 relates to the problem of removing fouling from an antifouling coating before repainting that coating and ensuring good interlayer adhesion between the new and old coatings. The antifouling coating is cleaned with a solution that can comprise an aqueous organic acid. However, this process takes place on ships that have been in water for prolonged periods, possibly years or more. Foulants such as marine organisms have had plenty time to attach to the hull and the stains of long term immersion in the sea can be seen. There is no suggestion that discolouration is a problem after a brief sea trial when marine organisms simply won't have had the opportunity to bind to the coating.

Also, EP-A-2308956 concerns repainting of the ship and therefore teaches covering over the cleaned antifouling coating with a new layer of fouling release material. There is no suggestion that cleaning might have value in the absence of recoating or that discolouration is removed using an organic acid wash. As the coating is repainted in this case the appearance of the washed coating is not important.

### Summary of Invention

Thus, viewed from one aspect the invention provides a process for cleaning at least a part of a ship's hull above the low load line which has become discoloured above the low load line, e.g. due to the presence of degradation products of an anti-fouling coating composition applied to the hull;
said method comprising applying to a discoloured ship's hull coated with a copper-containing anti-fouling coating composition, a cleaning solution comprising water and an organic carboxylic acid having a molecular weight of 400 g/mol or less and which comprises at least one hydrophilic group and at least one carboxylic acid group or comprises at least two carboxylic acid groups so as to remove at least a part of said discolouration;
wherein at least a part of the ship's hull above the low load line has been exposed to sea water for a period of no more than 60 days, e.g. during a sea trial period.

Viewed from another aspect the invention provides a process for cleaning at least a part of a ship's hull above the outfitting draft line which has become discoloured above the outfitting draft line, e.g. due to the presence of degradation products of an anti-fouling coating composition applied to the hull;
said method comprising applying to a discoloured ship's hull coated with a copper-containing anti-fouling coating composition, a cleaning solution comprising water and an organic carboxylic acid having a molecular weight of 400 g/mol or less and which comprises at least one hydrophilic group and at least one carboxylic acid group or comprises at least two carboxylic acid groups so as to remove at least a part of said discolouration;
wherein at least a part of the ship's hull above the outfitting draft line has been exposed to sea water for a period of no more than 60 days, e.g. during a sea trial period.

Viewed from another aspect the invention provides a process for cleaning at least a part of a ship's hull above the low load line which has become discoloured above the low load line, e.g. due to the presence of degradation products of an anti-fouling coating composition applied to the hull;
said method comprising applying to a discoloured ship's hull coated with a copper-containing anti-fouling coating composition, a cleaning solution comprising water and an organic carboxylic acid having a molecular weight of 400 g/mol or less and which comprises at least one hydrophilic group and at least one carboxylic acid group or comprises at least two carboxylic acid groups so as to remove at least a part of said discolouration;
wherein at least a part of the ship's hull above the low load line has been exposed to sea water for a period of no more than 60 days, e.g. during a sea trial period such that said discolouration presents and wherein at least a part of the discoloured ship's hull above the low load line which was exposed in sea water is subject to cleaning.

Viewed from another aspect the invention provides a process for cleaning at least a part of a ship's hull above the low load line which has become discoloured above the low load line, e.g. due to the presence of degradation products of an anti-fouling coating composition applied to the hull;
said method comprising applying to a discoloured ship's hull coated with a copper-containing anti-fouling coating composition, a cleaning solution comprising water and an organic carboxylic acid having a molecular weight of 400 g/mol or less and which comprises at least one hydrophilic group and at least one carboxylic acid group or comprises at least two carboxylic acid groups so as to remove at least a part of said discolouration;
wherein the discoloured ship's hull has become discoloured above the low load line through exposure to UV radiation, e.g. during an outfitting period, and subsequent exposure to sea water for a period of no more than 60 days, e.g. during a sea trial period.

Viewed from another aspect the invention provides a process for cleaning at least a part of a ship's hull coated with a copper-containing anti-fouling coating composition which has become discoloured by exposure to water as said copper-containing anti-fouling coating composition was drying;
said method comprising applying to a discoloured ship's hull coated with a copper-containing anti-fouling coating composition, a cleaning solution comprising water and an organic carboxylic acid having a molecular weight of 400 g/mol or less and which comprises at least one hydrophilic group and at least one carboxylic acid group or comprises at least two carboxylic acid groups so as to remove at least a part of said discolouration.

Viewed from another aspect the invention comprises a process comprising:
(i) allowing a ship's hull which has been coated with a copper-containing anti-fouling coating composition to be exposed to UV radiation above the low load line, e.g. from the sun, for at least one month;
(ii) exposing said ship's hull for a period of no more than 60 days to sea water e.g. in a sea trial, above the low load line and subsequently allowing at least a part of the hull above the low load line which has been immersed in sea water, or exposed to seawater "splash" from waves, to be above water again whereupon discolouration of the anti-fouling coating is observed on said hull;
(iii) washing said ship's hull with a cleaning solution comprising water and an organic carboxylic acid having a molecular weight of 400 g/mol or less and which comprises at least one hydrophilic group and at least one carboxylic acid group or comprises at least two carboxylic acid groups so as to remove said discolouration.

Viewed from another aspect the invention provides a process for cleaning at least a part of a ship's hull above the low load line which has become discoloured, e.g. by the presence of anti-fouling coating degradation products such as binder degradation products or copper salts,
said method comprising applying to a discoloured ship's hull coated with a copper-containing anti-fouling coating composition a cleaning solution comprising water and an organic carboxylic acid having a molecular weight of 400 g/mol or less and which comprises at least one hydrophilic group and at least one carboxylic acid group or comprises at least two carboxylic acid groups which is free of any C1-10-alkanols so as to remove said discolouration.

Viewed from another aspect the invention provides a process for cleaning at least a part of a ship's hull above the low load line which has become discoloured by the presence of anti-fouling agent degradation products such as binder degradation products or copper salts,
said method comprising applying to a discoloured ship's hull coated with a copper-containing anti-fouling coating composition a cleaning solution comprising water and an organic carboxylic acid having a molecular weight of 400 g/mol or less and which comprises at least one hydrophilic group and at least one carboxylic acid group or comprises at least two carboxylic acid groups so as to remove said discolouration wherein the cleaned hull is not recoated before the ship is delivered (and preferably put into service).

Viewed from another aspect the invention provides the use of a cleaning solution comprising an aqueous organic carboxylic acid having a molecular weight of 400 g/mol or less and which comprises at least one hydrophilic group and at least one carboxylic acid group or comprises at least two carboxylic acid groups to remove from above the low load line of a ship's hull, discolouration caused by the formation of degradation products which manifest during the sea trial of a ship wherein said ship's hull comprises a copper-containing anti-fouling composition.

### Detailed Description

The ship's hull being cleaned in the invention is one which is made primarily of metal, preferably steel, and has an external anti-fouling coating composition containing copper. It will be appreciated that there may be various layers between the metal hull and top anti-fouling coating composition such as anti-corrosion epoxy based coatings and so on. The anti-fouling coating layer must however be the outside layer and its application may involve one to several coats depending on specification. This type of ship's hull coating is conventional.

The fact that the ship's hull is metal is also designed to distinguish this invention from inventions relating to wooden boats or pleasure boats that might have synthetic hulls. These vessels are not ships. Ships are designed for transocean transport or at least deep sea transport and will generally have therefore a deep load line and a low load line painted on the hull.

The term discoloured is used herein to indicate that parts of the hull coated with an antifouling coating have a colour different from that of the antifouling coating due to the presence of degradation products from the antifouling coating composition, typically copper degradation products or degradation products of the binder used in the anti-fouling coating. These areas are easy to see visually. The degradation products tend to give white or green coloured deposits on the ship's hull although a spectrum of colours is, of course, possible. The hull itself is typically a red colour or brown colour as cuprous oxide, the copper biocide most commonly used in anti-fouling coatings is present in abundance in the coating and is reddy brown. It is preferred therefore if the non discoloured hull is coloured some shade of red or brown, such as light or dark brown or light or dark red.

In a further preferred embodiment, the invention relates to the cleaning of the hull below the deep load line and above the low load line.

The present invention relates to cleaning a ship's hull to make sure that the ship appears pristine for its delivery or naming. Delivery takes place when the ship is handed over to the owners. It is also typically named at this point. It will be appreciated that ships do not slide down slipways into water as they once did and ships are generally in water already when named. It also applies therefore that hull which is beneath the low load line is underwater and isn't seen. In general, there is no interest cleaning a part of the hull which is always underwater. Moreover, cleaning that part of the hull would require a return to dry dock which is prohibitively expensive. Additionally, discoloration under the water line may be removed by erosional forces during trading. Ideally, cleaning in this invention can be carried out without returning a vessel to dry dock. It can be carried out in port.

The invention is based on a chemical solution to the challenges mentioned above, the discolouration of the anti-fouling coating due to coloured degradants, predominantly white degradant(s) and greenish degradant(s). As the hull in question should not have been exposed to sea water above the low load line for any length of time, the problem of marine animal fouling such as that caused by barnacles and tube worms does not exist at this stage in the ship's life above the low load line.

The inventors have realised that the key to the problem here is a cleaning solution that has a pH value which will help hydrolyze the degraded polymer film, i.e. that part of the film which has a much higher water uptake than the ordinary film. Secondly, the solution should comprise a ligand to complex copper ions that give rise to some of the coloured deposits. By complexing these ions, which we believe are the source of coloured degradants such as green degradants and hence green discolouration on the ship's hull, we solubilise the copper ions and make it possible to wash them away. We have found that certain low molecular weight organic acids are capable of achieving both these aims.

It goes without saying of course, that the cleaning solution must also be one that utilises cheap and readily available chemicals. It is also very important that the cleaning agent shows biodegradability and does not harm the environment. There is no point using some complicated complexing agent as to do so would be prohibitively expensive when the substrate you are cleaning is the hull of an oil tanker. The cleaning solution must also not damage the underlying anti-fouling coating composition.

The cleaning solution of the invention therefore comprises water and a low molecular weight organic acid. The water used is preferably freshwater.

The low molecular weight organic acid is a carboxylic acid. It must have a Mw of less than 400, such as less than 350, especially less than 300 g/mol.

Organic acids of use in the invention must contain at least one carboxylic acid group and at least one other hydrophilic group such as a hydroxyl group or must contain at least two carboxylic acid groups. Simple acids such as butanoic acid or acetic acid do not remove the discolouration. Preferably, the organic acid contains multiple carboxylic groups, e.g. two or three carboxylic groups.

Hydrophilic groups of interest include hydroxyl, amino, thio, alkoxides, esters, acyl and the like. The hydrophilic group cannot be a carboxylic acid group. Preferred hydrophilic groups are hydroxyl and amino groups, especially hydroxyl groups.

The organic acid may also contain multiple carboxylic acid groups and at least one hydrophilic group such as at least one hydroxyl group.

The pH of the cleaning solution is preferably less than 7, such as 2 to 4. The organic acid is therefore a weak acid.

Organic acids of interest preferably contain only C and H in addition to the hydroxyl and carboxylic acid groups described above. Whilst the acids may contain a double bond, ideally the acids are saturated.

The organic carboxylic acid is preferably not part of a ring - i.e. lactones are preferably not used. Also, the acid must not be in salt form. The term carboxylic acid is therefore used herein to refer to the group -COOH.

Suitable organic acids therefore comprises citric acid, tartaric acid, malic acid, lactic acid or oxalic acid. It is obviously important that the acid dissolves in water, i.e. it is water soluble. The acid is preferably not fumaric acid as its water solubility is not high. Succinic acid is also not favoured.

It will obviously be possible to use a mixture of acids if desired. It will also be appreciated that some acids may come as hydrates.

It is preferred if the cleaning solution is free of primary alcohols. In particular, it is preferred if the cleaning solution is free of C1-10-alkanols such as methanol, ethanol, propanol and so on. Ideally the cleaning solution consists of water and the acid only.

The organic acid is preferably citric acid, tartaric acid, malic acid or lactic acid, most preferably, citric acid.

The concentration of acid in the solution can vary but obviously the ideal is as little acid as possible to achieve the desired effect. An upper limit on acid concentration may, of course, be provided by saturation point. Concentrations of 0.1 wt% to 10 wt% are envisaged. Preferred ranges are 0.25 wt% to 7.5 wt%, such as 0.5 to 5 wt%. Ideally the acid concentration is 0.5-4 wt% organic acid in water, preferably 1-3 wt%, most preferably about 2 wt%.

Interestingly, the acid cannot be a strong acid such as HCl. This acid does not remove discolouration and may damage the hull anyway. Strong bases such as sodium hydroxide have also proven ineffective, even though they can increase the hydrolysis rate.

The cleaning solution can be applied by any convenient means. Ideally, the solution can be sprayed onto the hull, e.g. using airless spray. Spraying means are conventional in the art. It is very beneficial to apply enough cleaning solution to allow it to pour down the side of the hull. It is important that the cleaning process does not need to involve scrubbing. Cleaning preferably occurs simply through the application of the cleaning solution.

As the chemical by-products believed to cause the problem of discolouration can only have been present for a short period of time on the hull, it is envisaged that the washing procedure is quick. There is no need to leave the cleaning solution on the hull for a prolonged period and in fact there is the risk that longer exposure might actually damage the surface. It is preferred therefore if the cleaning solution is washed off within one day, preferably within one hour of having been applied, such as within half an hour of having been applied, preferably within 15 minutes of being applied. Ideally, the cleaning solution is removed from the hull before it has had the chance to dry.

The applied cleaning solution can be washed off using fresh water or less preferably sea water. The use of spraying is again the best way of washing off the cleaning solution. It is preferred if a high water flow is used in the cleaning process. It is important to use sufficient water to wash off the cleaning solution and the discolouring coating residues. If insufficient water is used there is the risk of stripes forming on the hull.

### Substrate

The substrate being cleaned is a ship's hull which comprises an anti-fouling coating containing copper. In one embodiment, the hull may have been exposed to UV radiation for a prolonged period during outfitting. Subsequently, the substrate has preferably been exposed to sea water during a sea trial.

Alternatively, the anti-fouling coating may have become discoloured when the anti-fouling coating was drying after its original application.

Key to this invention is the fact that a hull on a ship that is new and is awaiting delivery or the hull on a ship that has been refurbished and is awaiting delivery and possible renaming needs to look new. Cars are briefly road tested before sale and would not be sold with scratches on them. Similarly, ships need to look new when delivered and owners do not want a hull which is discoloured. Additionally, the ship builder considers the vessels it produces to represent its brand. If its "brand" has a poor appearance that may affect the market position of that ship builder.

The term refurbish is used here to imply a major overhaul of the ship and not just the repainting of the hull. Repainting of the hull occurs frequently on ships - that is not refurbishment and this invention does not relate to cleaning of the hull before a repainting procedure. This invention is of primary interest, however on new ships that have yet to be delivered.

A ship is obviously built in a dry dock where the hull is painted with an anti-fouling coating composition. The ship is then generally birthed (in sea water) during outfitting where the ship's hull above the low load line (or outfitting draft line) is above the water. These parts of the hull are typically exposed to the air and sun and hence UV radiation for many months whilst the ship is outfitted. The inventors believe that during this period, UV radiation can change the anti-fouling coating. The substrates cleaned in the present case are preferably exposed to UV radiation (from the sun) for a period of at least 1 month, preferably at least 2 months after the anti-fouling coating composition has been applied to the hull. For avoidance of doubt, if a vessel is in an outfitting birth for a period of 1 calendar month it is deemed to have been exposed to UV radiation for a period of 1 month.

Strong indications suggest that the UV light degrades the surface of the anti-fouling coating composition.

When the degraded coating is placed in water, the coating takes up more water. This water uptake in the very top-layer of the coating seems to affect the morphology of the coating with a whitish appearance as a result. Without wishing to be limited by theory, it is believed that the white colour is caused by degradants of the binder polymer in the anti-fouling coating, possibly together with some copper salts.

The invention requires exposure to sea water. The claims cannot be interpreted to exclude the presence of a sea water exposure step. Water uptake primarily takes place during sea trial and discolouration becomes visible when parts of the hull submerged during sea trial, or exposed to sea water during water "splash" from passing waves, return above water again at the end of the sea trial. It may also be that the deposits manifest themselves when the hull is re-exposed to the air again after sea trial. A sea trial is the testing phase of a ship. It is usually the last phase of ship construction and takes place in the sea and can last from a few hours to many days. It is thus preferred that the substrate to be cleaned according to the invention has been subject to sea trial. In particular, that sea trial should have lasted at least 24 hrs. Ideally, the sea trial should have lasted no more than 2 months, preferably no more than 1 month, especially no more than two weeks.

Sea trials are conducted to measure a vessel's performance and general seaworthiness. Testing of a vessel's speed, manoeuvrability, equipment and safety features are usually conducted. Successful sea trials subsequently lead to a vessel's certification for commissioning and acceptance by its owner. The sea trial involves operating the ship under full ballast and hence immersion of the ship's hull from the low load line to the deep load line underwater.

When the sea trial is complete, any ballast used is removed and the ship typically returns to port for some last adjustments before formal delivery. As a new ship costs an enormous amount of money and its delivery is obviously a large event for the owner and manufacturer, it is likely to be covered by interested media and owners and yard builders do not want the whitish discolouration discussed above to spoil the appearance of the otherwise pristine new vessel.

We also have found a problem with copper degradation. Copper can react with various compounds present in sea water to form by-products. These degradation products which may come in a variety of colours but in particular green, also cause an ugly hull appearance and can be removed using the process of the invention.

The process of the invention therefore leads to a removal of discolouration on the hull. In particular the hull is red or brown when clean and the discolouration is caused by the presence of typically green and/or white deposits on the hull. Successful removal of these deposits using the process of the invention can be determined visually. It is easy for any one to determine whether a green or white deposit remains on a red background for example.

Ideally therefore the cleaning process takes place on the ship's hull between the low load line and deep load line. Ideally, the discolouration is present between the low load line and the deep load line. More preferably, during sea trial the area of hull between the low load line and deep load line will have been exposed to sea water for a period of at least 24 hrs, such as at least two days. Ideally that area will have been exposed to sea water during sea trial for less than 1 month, preferably less than 2 weeks.

It will be appreciated that however discolouration occurs, it will be desirable to remove it and it will be appreciated that removal will occur after sea trial whether or not the discolouration actually occurred during sea trial. If for example some discolouration occurs due to water uptake during the drying of the anti-fouling coating that discolouration can eventually be removed but after the sea trial takes place. Irrespective therefore of the mechanism and timing of the discolouration, its removal should occur after sea trial.

The substrate being cleaned according to the invention comprises an antifouling coating composition which comprises at least two components; a binder such as a silyl ester copolymer, and a copper based anti-fouling agent.

### Binder

Anti-fouling coatings must contain a binder. Any well known binder for use in this industry can be used such as an acrylic polymer with metal carboxylates in pendant side groups on the polymeric backbone. It is preferred, however, if a silyl ester copolymer binder is used. These copolymers are well known and, in its broadest embodiment, the invention covers any of these well known hydrolysable binders. Such silyl ester copolymers are well known commercial products.

In a preferred embodiment, the silyl ester copolymer of the invention comprises the residue of at least one monomer (A) of formula (I) 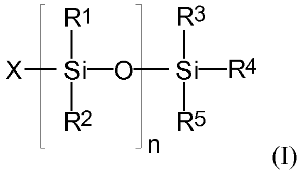 wherein
R¹ and R² are each independently selected from linear or branched C₁₋₄ alkyl groups;
R³, R⁴ and R⁵ are each independently selected from the group consisting of linear or branched C₁₋₂₀ alkyl groups, C₃₋₁₂ cycloalkyl groups, optionally substituted C₆₋₂₀ aryl groups and -OSi(R⁶)₃ groups;
each R⁶ is independently a linear or branched C₁₋₄ alkyl groups,
n is an integer from 0 to 5;
X is an ethylenically unsaturated group, such as acryloyloxy group, methacryloyloxy group, (methacryloyloxy)alkylcarboxy group, (acryloyloxy)alkylcarboxy group, maleinoyloxy group, fumaroyloxy group, itaconoyloxy group and citraconoyloxy group.

The term "alkyl" is intended to cover both linear or branched alkyl groups such as methyl, ethyl, propyl, and butyl. Particularly preferred cycloalkyl groups include cyclohexyl and substituted cyclohexyl.

Examples of the substituted aryl groups include aryl groups substituted with at least one substituent selected from halogens, alkyl groups having 1 to about 8 carbon atoms, acyl groups, or a nitro group. Particularly preferred aryl groups include substituted and unsubstituted phenyl, benzyl, phenalkyl or naphthyl.

In a further preferred embodiment, the silyl ester copolymer of the present invention comprises one or more monomers (A) having silyl ester functionality as defined by the general formula (I) in the amount of 1-99 % by mole of the total mixture of monomers, more preferably 15-60 % by mole, most preferably 20-40% by mole.

Ideally, preferred silyl ester monomers are based on compounds of formula (I) in which n is 0, i.e. those of formula X-SiR³R⁴R⁵.

Examples of monomers containing silyl ester functionality, e.g. as defined by the general formula (I) include:
silyl ester monomers of acrylic acid and methacrylic acid, such as triethylsilyl (meth)acrylate, tri-n-propylsilyl (meth)acrylate, triisopropylsilyl (meth)acrylate, tri-n-butylsilyl (meth)acrylate, triisobutylsilyl (meth)acrylate, tri-tert-butylsilyl (meth)acrylate, tri-sec-butylsilyl (meth)acrylate, tri-n-pentylsilyl (meth)acrylate, triisopentylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-(p-methylphenyl)silyl (meth)acrylate, tribenzylsilyl (meth)acrylate, ethyldimethylsilyl (meth)acrylate, n-propyldimethylsilyl (meth)acrylate, isopropyldimethylsilyl (meth)acrylate, n-butyldimethylsilyl (meth)acrylate, isobutyldimethylsilyl (meth)acrylate, tert-butyldimethylsilyl (meth)acrylate, n-pentyldimethylsilyl (meth)acrylate, n-hexyldimethylsilyl (meth)acrylate, neohexyldimethylsilyl (meth)acrylate, n-octyldimethylsilyl (meth)acrylate, n-decyldimethylsilyl (meth)acrylate, dodecyldimethylsilyl (meth)acrylate, n-octadecyldimethylsilyl (meth)acrylate, cyclohexyldimethylsilyl (meth)acrylate, phenyldimethylsilyl (meth)acrylate, benzyldimethylsilyl (meth)acrylate, phenethyldimethylsilyl (meth)acrylate, (3-phenylpropyl)dimethylsilyl (meth)acrylate, p-tolyldimethylsilyl (meth)acrylate, isopropyldiethylsilyl (meth)acrylate, n-butyldiisopropylsilyl (meth)acrylate, n-octyldiisopropylsilyl (meth)acrylate, methyldi-n-butylsilyl (meth)acrylate, methyldicyclohexylsilyl (meth)acrylate, methyldiphenylsilyl (meth)acrylate, tert-butyldiphenylsilyl (meth)acrylate, nonamethyltetrasiloxy_(meth)acrylate, bis(trimethylsiloxy)methylsilyl (meth)acrylate, tris(trimethylsiloxy)silyl (meth)acrylate;
silyl ester monomers of maleic acid such as triethylsilyl ethyl maleate, tri-n-propylsilyl n-propyl maleate, triisopropylsilyl methyl maleate, tri-n-butylsilyl n-butyl maleate and tri-n-hexylsilyl n-hexyl maleate;
silyl ester monomers of fumaric acid such as triethylsilyl ethyl fumarate, tri-n-propylsilyl n-propyl fumarate, triisopropylsilyl methyl fumarate, tri-n-butylsilyl n-butyl fumarate and tri-n-hexylsilyl n-hexyl fumarate;
silyl esters monomers of carboxyalkyl (meth)acrylate such as triethylsiloxycarbonylmethyl (meth)acrylate, tri-n-propylsiloxycarbonylmethyl (meth)acrylate, triisopropylsiloxycarbonylmethyl (meth)acrylate, tri-n-butylsiloxycarbonylmethyl (meth)acrylate, triisobutylsiloxycarbonylmethyl (meth)acrylate, tri-tert-butylsiloxycarbonylmethyl (meth)acrylate, tri-sec-butylsiloxycarbonylmethyl (meth)acrylate, tri-n-pentylsiloxycarbonylmethyl (meth)acrylate, triisopentylsiloxycarbonylmethyl (meth)acrylate, tri-n-hexylsiloxycarbonylmethyl (meth)acrylate, tri-n-octylsiloxycarbonylmethyl (meth)acrylate, tri-n-dodecylsiloxycarbonylmethyl (meth)acrylate, triphenylsiloxycarbonylmethyl (meth)acrylate, tri-(p-methylphenyl)siloxycarbonylmethyl (meth)acrylate, tribenzylsiloxycarbonylmethyl (meth)acrylate, ethyldimethylsiloxycarbonylmethyl (meth)acrylate, n-propyldimethylsiloxycarbonylmethyl (meth)acrylate, isopropyldimethylsiloxycarbonylmethyl (meth)acrylate, n-butyldimethylsiloxycarbonylmethyl (meth)acrylate, isobutyldimethylsiloxycarbonylmethyl (meth)acrylate, tert-butyldimethylsiloxycarbonylmethyl (meth)acrylate, n-pentyldimethylsiloxycarbonylmethyl (meth)acrylate, n-hexyldimethylsiloxycarbonylmethyl (meth)acrylate, neohexyldimethylsiloxycarbonylmethyl (meth)acrylate, n-octyldimethylsiloxycarbonylmethyl (meth)acrylate, n-decyldimethylsiloxycarbonylmethyl (meth)acrylate, dodecyldimethylsiloxycarbonylmethyl (meth)acrylate, n-octadecyldimethylsiloxycarbonylmethyl (meth)acrylate, cyclohexyldimethylsiloxycarbonylmethyl (meth)acrylate, phenyldimethylsiloxycarbonylmethyl (meth)acrylate, benzyldimethylsiloxycarbonylmethyl (meth)acrylate, phenethyldimethylsiloxycarbonylmethyl (meth)acrylate, (3-phenylpropyl)dimethylsiloxycarbonylmethyl (meth)acrylate, p-tolyldimethylsiloxycarbonylmethyl (meth)acrylate, isopropyldiethylsiloxycarbonylmethyl (meth)acrylate, n-butyldiisopropylsiloxycarbonylmethyl (meth)acrylate, n-octyldiisopropylsiloxycarbonylmethyl (meth)acrylate, methyldi-n-butylsiloxycarbonylmethyl (meth)acrylate, methyldicyclohexylsiloxycarbonylmethyl (meth)acrylate, methyldiphenylsiloxycarbonylmethyl (meth)acrylate, tert-butyldiphenylsiloxycarbonylmethyl (meth)acrylate; and others as described in WO03/080747.

The polymerizable monomers other than monomers A are monomers copolymerizable with monomers A. Examples thereof include (meth)acrylic acid and (meth)acrylic esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, amyl (meth)acrylate, hexyl (meth)acrylate, 2-ethylhexyl (meth)acrylate, n-octyl (meth)acrylate, isooctyl (meth)acrylate, 3,5,5-trimethylhexyl (meth)acrylate, decyl (meth)acrylate, isodecyl (meth)acrylate, dodecyl (meth)acrylate, isotridecyl (meth)acrylate, octadecyl (meth)acrylate, cyclohexyl (meth)acrylate, 4-tert-butylcyclohexyl (meth)acrylate, methyl (meth)acrylate, dicyclopentenyl (meth)acrylate, dicyclopentenyl oxyethyl (meth)acrylate, isobornyl (meth)acrylate, phenyl (meth)acrylate, benzyl (meth)acrylate, naphthyl (meth)acrylate, 2-hydroxyethyl (meth)acrylate, hydroxypropyl (meth)acrylate, hydroxybutyl (meth)acrylate, poly(ethylene glycol) (meth)acrylate, poly(propylene glycol) (meth)acrylate, 2-methoxyethyl (meth)acrylate, 2-ethoxyethyl (meth)acrylate, 2-butoxyethyl (meth)acrylate, 2-phenoxyethyl (meth)acrylate, ethyl diglycol (meth)acrylate, ethyl triglycol (meth)acrylate, butyl diglycol (meth)acrylate, poly(ethylene glycol) methyl ether (meth)acrylate, poly(propylene glycol) methyl ether (meth)acrylate, tetrahydrofurfuryl (meth)acrylate, glycidyl (meth)acrylate, 2-(dimethylamino)ethyl (meth)acrylate, 2-(diethylamino)ethyl (meth)acrylate, 3-(dimethylamino)propyl (meth)acrylate, 3-(diethylamino)propyl (meth)acrylate, 2-(tert-butylamino)ethyl (meth)acrylate and lactone modified hydroxyalkyl (meth)acrylates such as caprolactone acrylate and others as described in WO 2009/149919;

Other examples of the polymerizable monomers include esters of crotonic acid, maleic acid, fumaric acid, itaconic acid and citraconic acid such as methyl crotonate, ethyl crotonate, isobutyl crotonate, hexyl crotonate, dimethyl maleate, diethyl maleate, dibutyl maleate, maleic anhydride, dimethyl fumarate, diethyl fumarate, diisobutyl fumarate, dimethyl itaconate, dibutyl itaconate, itaconic anhydride, citraconic anhydride;
vinyl esters such as vinyl acetate, vinyl propionate, vinyl butyrate, vinyl pivalate, vinyl dodecanoate, vinyl benzoate, vinyl 4-*tert*-butylbenzoate, VeoVa^{™} 9, VeoVa^{™} 10_{;}
(meth)acrylamide, *N*-propyl (meth)acrylamide, *N*-isopropyl (meth)acrylamide, *N-tert*-butyl (meth)acrylamide, *N*-phenyl (meth)acrylamide, *N-*methylol (meth)acrylamide, *N*-(isobutoxymethyl) (meth)acrylamide, *N*-[3-(dimethylamino)propyl] (meth)acrylamide, diacetone (meth)acrylamide, *N,N-*dimethyl (meth)acrylamide;
metal salts of acrylic acid and methacrylic acid and other metal functional monomers, e.g. as described in EP 1 323 745, (meth)acrylonitrile, (2-acetoacetoxy)ethyl (meth)acrylate and other monomers as described in WO 96/41842 and US 4 593 055;
maleimide and N-substituted maleimides such as maleimide, N-phenyl maleimide and others as described in WO 96/41841;
N-vinyl lactams, N-vinyl amides such as N-vinyl pyrrolidone, and other lactam and amide functional monomers as described in EP 1 127 902;
other vinyl monomers such as styrene, α-methyl styrene, vinyl toluene and p-chlorostyrene.

In producing the polymer containing organosilyl ester groups, the proportion of at least one of monomers A represented by formula (I) to at least one polymerizable monomer other than monomers A can be suitably determined according to the use of the coating composition. In general, however, the proportion of at least one of monomers A is preferably from 1 to 99% by weight and that of at least one other monomer is preferably from 99 to 1% by weight.

The polymer containing organosilyl ester groups can be obtained by polymerizing such a monomer mixture in the presence of a polymerization catalyst by any of various methods such as solution polymerization, bulk polymerization, emulsion polymerization, and suspension polymerization in an ordinary way. In preparing a coating composition using this polymer containing organosilyl ester groups, the polymer is preferably diluted with an organic solvent to give a polymer solution having an appropriate viscosity. From this standpoint, it is desirable to employ solution polymerization or bulk polymerization.

Examples of the polymerization initiators include azo compounds such as azo compounds such as 2,2'-azobis(2-methylbutyronitrile), 2,2'-azobis(isobutyronitrile) and 1,1'-azobis(cyanocyclohexane) and peroxides such as *tert*-butyl peroxypivalate, *tert*-butyl peroxy-2-ethylhexanoate, *tert*-butyl peroxydiethylacetate, *tert*-butyl peroxyisobutyrate, di-*tert*-butyl peroxide, *tert*-butyl peroxybenozate, and *tert*-butyl peroxyisopropylcarbonate, *tert*-amyl peroxypivalate, *tert*-amyl peroxy-2-ethylhexanoate, 1,1-di(*tert*-amyl peroxy)cyclohexane and dibenzoyl peroxide. These compounds are used alone or as a mixture of two or more thereof.

Examples of the organic solvent include aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, tert-butyl acetate, amyl acetate, ethylene glycol methyl ether acetate; ethers such as ethylene glycol dimethyl ether, diethylene glycol dimethyl ether, dibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents. These compounds are used alone or as a mixture of two or more thereof.

The thus-obtained polymer containing organosilyl ester groups desirably has a weight-average molecular weight of from 1,000 to 100,000. The solution of the polymer desirably has a viscosity of 50 P or lower, preferably 20 P or lower at 25°C. For attaining such a viscosity, the polymer solution is desirably regulated so as to have a solid content of from 5 to 90% by weight, preferably from 15 to 85% by weight.

### Antifouling agent

The antifouling coating composition of the invention contains at least one copper based compound capable of preventing the settlement of marine organisms on a surface, and/or prevents the growth of marine organisms on a surface and/or encourages the dislodgement of marine organisms from a surface. Examples include copper oxides, e.g. cuprous oxide and cupric oxide; copper alloys, e.g. copper-nickel alloys; copper salts, e.g. copper thiocyanate, and copper sulphide.

Examples of organometallic biologically active compounds include organocopper compounds such as copper pyrithione, copper acetate, copper naphthenate, oxine copper, copper nonylphenolsulfonate, copper bis(ethylenediamine)bis(dodecylbenzensulfonate) and copper bis(pentachloropheno late).

Whilst the anti-fouling coating may contain other anti-fouling agents, the composition must contain a copper based anti-fouling agent.

Preferred biologically active agents are cuprous oxide.

The total amount of biologically active agent in the antifouling compositions of the invention may be in the range 0.5 to 80 wt%, such as 1 to 70 wt%. It will be appreciated that the amount of this component will vary depending on the end use and the biologically active compound used.

In addition to the binder and copper antifouling agent, the antifouling coating composition according to the present invention may optionally further comprise one or more components selected among other binders, pigments, stabilisers, extenders and fillers, additives, solvents and thinners.

An additional binder can be used to adjust the properties of the antifouling coating film. Examples of binders that can be used in addition to the silyl esters of the invention include:
rosin materials such as wood rosin, tall oil rosin and gum rosin;
rosin derivatives such as hydrogenated and partially hydrogenated rosin, disproportionated rosin, dimerised rosin, polymerised rosin, maleic acid esters, fumaric acid esters and other esters of rosin and hydrogenated rosin, copper resinate, zinc resinate, calcium resinate, magnesium resinate and other metal resinates of rosin and polymerised rosin and others as described in WO 97/44401;
resin acids and derivatives thereof such as copal resin and sandarach resin; other carboxylic acid containing compounds such as abietic acid, neoabietic acid, dehydroabietic acid, dihydroabietic acid, tetrahydroabietic acid, secodehydroabietic acid, pimaric acid, paramatrinic acid, isoprimaric acid, levoprimaric acid, agathenedicarboxylic acid, sandaracopimalic acid, lauric acid, stearic acid, isostearic acid, oleic acid, linoleic acid, linolenic acid, isononanoic acid, versatic acid, naphthenic acid, tall oil fatty acid, coconut oil fatty acid, soyabean oil fatty acid and derivatives thereof;
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(N-vinyl pyrrolidone) copolymers and other copolymers as described in EP 0 526 441;
(meth)acrylic polymers and copolymers, such as poly(n-butyl acrylate), poly(n-butyl acrylate-co-isobutyl vinyl ether);
vinyl ether polymers and copolymers, such as poly(methyl vinyl ether), poly(ethyl vinyl ether), poly(isobutyl vinyl ether), poly(vinyl chloride-co-isobutyl vinyl ether);
aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units;
metal containing polyesters for example as described in EP 1 033 392 and EP 1 072 625; alkyd resins and modified alkyd resins; and
other condensation polymers as described in WO 96/14362.

Examples of inorganic pigments such as titanium dioxide, iron oxides, zinc oxide and zinc phosphate.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

In general, any of these optional components can be present in an amount ranging from 0.1 to 50 wt%, typically 0.5 to 20 wt%, preferably 0.75 to 15 wt% of the antifouling composition. It will be appreciated that the amount of these optional components will vary depending on the end use.

It will be appreciated that before application onto a ship the antifouling composition contains a solvent. Preferred solvents are aromatic solvents, especially xylene and mixtures of aromatic hydrocarbons but once applied the solvent evaporates. The hull of the invention obviously comprises an anti-fouling coating composition after application and possible curing has taken place.

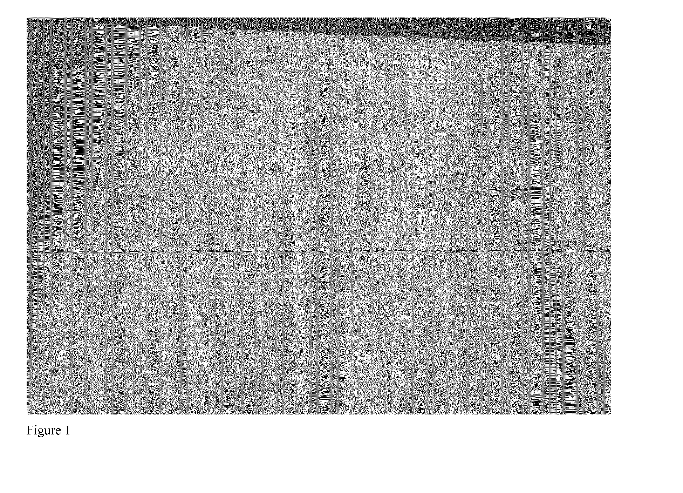

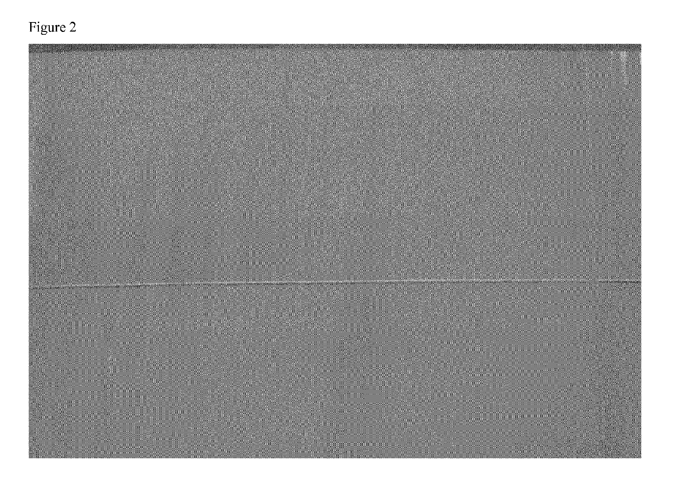

The invention will now be defined with reference to the following non limiting examples and figures. Figure 1 is a ship's hull with white discolouration present due to UV radiation exposure and subsequent sea trial. Figure 2 is the ship's hull having been treated with an aqueous 3 wt% citric acid solution according to example 1.

### Examples

Various cleaning solutions were prepared as explained in table 1 below.

Table 1 shows the amount of acid in wt% in fresh water. The cleaning solutions contain nothing else.

All these cleaning solutions were sprayed onto a square meter of a heavily discoloured hull (see figure 1). The hull in question was from a ship which had been coated in a copper-containing silyl ester copolymer anti-fouling coating and had outfitted for a period of 3 months after application of the final antifouling coat. Subsequently, the ship had been sea trialled for 9 days off the coast of Korea, of which less than 48 hours were under full ballast, and returned to dry dock. A distinct whitish discolouration was visible on the hull.

After 5 minutes the substrate was washed off by spraying freshwater over the hull. The difference in colour after washing was examined visually. Results are summarised in table 1.

| **Example** | **Component** | **Concentration [wt%]** | **Cleaning efficiency** |
|---|---|---|---|
| 1 | Citric acid | 0.5/1.0/2.0/2.5/3.0/4.0 | 3/3/4/4/4/4 |
| 2 | L-Tartaric acid | 0.5 / 1.0/2.0 | 3/3/4 |
| 3 | Malic acid | 0.5 / 1.0/2.0 | 1/2/3 |
| 4 | Lactic acid | 0.5 / 1.0/2.0 | 1/2/3 |
| 5 | Oxalic acid | 0.5 / 1.0/2.0 | 0/1/1 |
| 6 | Acetic acid | 0.5 / 1.0/2.0 | 0/0/0 |
| 7 | L-ascorbic acid | 0.5 / 1.0/2.0 | 0/0/0 |
| 8 | n-Butyric acid | 0.5 / 1.0/2.0 | 0/0/0 |
| 9 | Potassium citrate | 0.5 / 1.0/2.0 | 0/0/0 |
| | monohydrate | | |
| 10 | Phosphoric acid | 0.5 / 1.0/2.0 | 0/0/0 |
| 11 | HCl | 0.1/ 0.5/1.0 | 0/0/0 |
| 12 | NaOH | 0.1/ 0.5/1.0 | 0/0/0 |

| | | | |
|---|---|---|---|
| Acceptable level above 3. 4 = efficient cleaning heavily discoloured surface. 3 = efficient cleaning moderate discoloured surface. 2 = some cleaning efficiency 1= not efficient enough. 0 = no effect on removal of discoloration. 3 and 4 are considered effective in the yard situation. | | | |

On this surface all concentrations of citric acid worked well in removing the discoloration. Tartaric acid, malic acid and lactic acid also performed to an acceptable level in appropriate concentration. Monocarboxylic acids acetic acid and butanoic acid as well as a citrate salt, phosphoric acid, NaOH (Sodium hydroxide) and HCl (Hydrochloric acid) were found to be ineffective.

## Claims

1. A process for cleaning at least a part of a ship's hull above the low load line which has become discoloured above the low load line;
said method comprising applying to a discoloured ship's hull coated with a copper-containing anti-fouling coating composition, a cleaning solution comprising water and an organic carboxylic acid having a molecular weight of 400 g/mol or less and which comprises at least one hydrophilic group and at least one carboxylic acid group or comprises at least two carboxylic acid groups, so as to remove at least a part of said discolouration;
wherein at least a part of the ship's hull above the low load line has been exposed to sea water for a period of no more than 60 days, e.g. during a sea trial period.

2. A process as claimed in claim 1 wherein at least a part of the ship's hull above the low load line has been exposed to sea water for a period of no more than 60 days, e.g. during a sea trial period such that said discolouration presents and wherein at least a part of the discoloured ship's hull above the low load line which was exposed in sea water is subject to cleaning.

3. A process as claimed in claim 1 and 2 wherein the discoloured ship's hull has become discoloured through exposure to UV radiation, e.g. during an outfitting period, and subsequent exposure to sea water for a period of no more than 60 days, e.g. during a sea trial period.

4. A process comprising:
(i) allowing a ship's hull which has been coated with a copper-containing anti-fouling coating composition to be exposed to UV radiation above the low load line, e.g. from the sun, for at least one month;
(ii) exposing said ship's hull for a period of no more than 60 days to sea water e.g. in a sea trial, above the low load line and subsequently allowing at least a part of the hull above the low load line which has been immersed in sea water to be above water again whereupon discolouration of the anti-fouling coating is observed on said hull;
(iii) washing said ship's hull with a cleaning solution comprising water and an organic carboxylic acid having a molecular weight of 400 g/mol or less and which comprises at least one hydrophilic group and at least one carboxylic acid group or comprises at least two carboxylic acid groups so as to remove said discolouration.

5. A process as claimed in any preceding claim wherein the anti-fouling coating composition additionally comprises rosin or a derivative thereof.

6. A process as claimed in any preceding claim where discolouration and cleaning occurs below the deep load line and above the low load line.

7. A process as claimed in any preceding claim wherein the cleaning solution is free of C1-10 alkanols, preferably the cleaning solution consists of water and the acid.

8. A process as claimed in any preceding claim wherein after cleaning the ship is delivered to the customer and placed in service without any recoating of the ship's hull.

9. A process as claimed in any preceding claim wherein the carboxylic acid contains multiple carboxylic acid groups and at least one hydroxyl group.

10. A process as claimed in any preceding claim wherein the carboxylic acid citric, lactic, malic, or tartaric acid, preferably citric acid.

11. A process as claimed in any preceding claim wherein the concentration of carboxylic acid in water is 0.5 to 4 wt%.

12. A process as claimed in any preceding claim wherein the non discoloured ship's hull is red or brown and wherein the discolouration on the ship's hull is predominantly green and/or white

13. A process as claimed in any preceding claim wherein the hull is exposed to UV for at least 1 month, especially at least 3 months before exposure to sea water.

14. A process as claimed in any preceding claim wherein the section of the hull that is discoloured is exposed to sea water for 24 hrs to 1 month, e.g. 24 hrs to 14 days.

15. A process as claimed in any preceding claim wherein the anti-fouling composition comprises cuprous oxide.

16. Use of a cleaning solution comprising an aqueous organic carboxylic acid having a molecular weight of 400 g/mol or less and which comprises at least one hydrophilic group and at least one carboxylic acid group or comprises at least two carboxylic acid groups to remove from above the low load line of a ship's hull, discolouration caused by the formation of degradation products during the sea trial of a ship wherein said ship's hull comprises a copper based anti-fouling composition.
